# DEMANDE DE BREVET EUROPEEN

(11) **EP 2 386 743 A1**
(43) Date de publication de la demande: **16.11.2011**
(21) Numéro de dépôt: 11290197.0
(22) Date de dépôt: 21.04.2011
(51) Int. Cl.: F02D 41/06, F02D 13/02, F01N 3/22, F01N 3/34, F02D 35/02

(54) **Procédé de contrôle de l'injection d'air frais a l'échappement d'un moteur a combustion interne**

(30) Priorité: 12.05.2010 FR 1002036
(71) Demandeur: IFP Energies nouvelles, 92852 Rueil-Malmaison Cedex (FR)
(72) Inventeur: Anderlohr, Jorg, 92500 Rueil-Malmaison (FR); Pires da Cruz, Antonio, 92500 Rueil-Malmaison (FR); Vangraefschepe, Franck, 92500 Rueil-Malmaison (FR); Lavy, Jacques, 38200 Serpaize (FR); Bounaceur, Roda, 54840 Velaine-En-Haye (FR); Battin-Leclerc, Frédérique, 54740 Haroue (FR)

(57) **Abrégé**

La présente invention concerne un procédé de contrôle de l'injection d'air à l'échappement d'un moteur à combustion interne fonctionnant selon un cycle durant lequel sa phase de détente (D) est de course plus grande que sa phase de compression (C).
Selon l'invention, le procédé consiste, durant l'étape de démarrage à froid de ce moteur et pendant sa phase de détente, à injecter de l'air frais à l'échappement et à ouvrir la soupape d'échappement (34) quand la pression à l'intérieur de la chambre combustion est inférieure à la pression régnant à l'échappement de manière à introduire dans les gaz d'échappement présents dans la chambre de combustion l'air frais provenant de cet échappement.

## Description

La présente invention se rapporte à un procédé d'injection d'air frais à l'échappement d'un moteur à combustion interne, notamment pour véhicule automobile.

Elle concerne plus particulièrement un tel procédé appliqué à un moteur fonctionnant selon un cycle durant lequel la phase de détente est plus longue que la phase de compression, tel que pour un cycle de Miller.

Comme cela est généralement connu, les polluants émis durant le démarrage à froid de moteurs à combustion interne, notamment de moteurs à allumage commandée, représentent une problématique pour les constructeurs d'automobiles.

En effet durant ce démarrage à froid, les moyens de dépollution de gaz d'échappement, comme un catalyseur, qui équipent habituellement ces moteurs n'ont pas une température de fonctionnement suffisamment élevée pour traiter efficacement ces polluants, dite température de "light off'.

De ce fait, une grande partie de polluants contenus dans ces gaz d'échappement, comme des hydrocarbures (HC) imbrûlés et/ou des oxydes de carbone (CO), est rejetée dans l'atmosphère sans être traitée au préalable, ce qui apporte une nuisance non négligeable.

Pour que ce catalyseur puisse atteindre rapidement sa température de fonctionnement, il est connu de réaliser un amorçage rapide de celui-ci en injectant de l'air frais dans la ligne à l'échappement et en amont de ce catalyseur.

Plus particulièrement, il est notamment connu d'injecter cet air frais en aval des soupapes d'échappement dans le but d'amener de l'oxygène aux gaz d'échappement qui circulent dans la tubulure d'échappement de manière à réaliser une combustion avec les HC imbrûlés qui y sont encore contenus.

Une telle postcombustion permet, d'une part, de réduire directement en partie les HC et le CO et, d'autre part, d'augmenter la température des gaz d'échappement qui vont par la suite traverser le catalyseur en y augmentant ainsi sa température.

Il a été constaté que, pour réaliser cette postcombustion, il est nécessaire d'introduire l'air frais le plus près possible des soupapes d'échappement, endroit où la température des gaz d'échappement est la plus élevée. Cependant, comme l'air introduit est froid par rapport aux gaz brûlés qui sont très chauds, le taux de mélange est un facteur déterminant pour réaliser cette postcombustion. En effet, si une grande quantité d'air froid est présente, les réactions chimiques sont stoppées. En contrepartie, si cette quantité d'air est insuffisante, le dégagement de chaleur par réaction du mélange n'est pas suffisant pour démarrer la combustion de ce mélange.

Ceci requiert donc un réglage très précis des quantités d'air frais et de gaz d'échappement présents à l'échappement pour pouvoir obtenir le mélange adéquate sous peine de ne pas avoir la possibilité de réaliser la postcombustion du mélange air frais/gaz d'échappement.

La présente invention se propose de remédier aux inconvénients ci-dessus mentionnés grâce à un procédé d'injection d'air à l'échappement qui permet de réaliser la postcombustion du mélange air frais/gaz d'échappement et cela quelque soit la qualité de ce mélange.

A cet effet, l'invention concerne un procédé de contrôle de l'injection d'air à l'échappement d'un moteur à combustion interne, notamment pour véhicule automobile, fonctionnant selon un cycle durant lequel sa phase de détente est de course plus grande que sa phase de compression et comprenant au moins un cylindre avec une chambre de combustion, un piston coulissant en un mouvement alternatif entre un point mort haut et un point mort bas, au moins un moyen d'admission avec une soupape associée à une tubulure d'admission, au moins un moyen d'échappement avec une soupape associée à une tubulure d'échappement, des moyens d'injection d'air frais à l'échappement et une ligne d'échappement comprenant au moins un moyen de dépollution des gaz d'échappement, caractérisé en ce qu'il consiste, durant l'étape de démarrage à froid de ce moteur et pendant sa phase de détente, à injecter de l'air frais à l'échappement et à ouvrir la soupape d'échappement quand la pression à l'intérieur de la chambre combustion est inférieure à la pression régnant à l'échappement de manière à introduire dans les gaz d'échappement présents dans la chambre de combustion l'air frais provenant de cet échappement.

Le procédé peut consister à ouvrir la soupape d'échappement à un angle de vilebrequin pour lequel la pression à l'intérieur de la chambre combustion est inférieure à la pression régnant à l'échappement.

Le procédé peut consister à injecter de l'air frais à l'intérieur de la tubulure d'échappement.

Le procédé peut consister à injecter de l'air frais à l'intérieur du collecteur d'échappement de la ligne d'échappement.

Le procédé peut consister à injecter de l'air frais à l'échappement avant l'ouverture de la soupape d'échappement.

Le procédé peut consister à injecter de l'air frais à l'échappement après l'ouverture de la soupape d'échappement.

Le procédé peut consister à réaliser une succession d'ouvertures et de fermetures de la soupape d'échappement pour introduire dans la chambre de combustion l'air frais provenant de l'échappement.

Les autres caractéristiques et avantages de l'invention vont apparaître maintenant à la lecture de la description qui va suivre, donnée à titre uniquement illustratif et non limitatif, et à laquelle sont annexées :
- les figures 1 à 4 qui sont des schémas montrant un moteur à combustion interne dans différentes configurations de fonctionnement et utilisant le procédé selon l'invention, et
- la figure 5 qui montre les différentes lois de levées des soupapes du moteur selon les figures 1 à 4 entre une position d'ouverture (O) et de fermeture (F) en fonction de l'angle de vilebrequin (V).

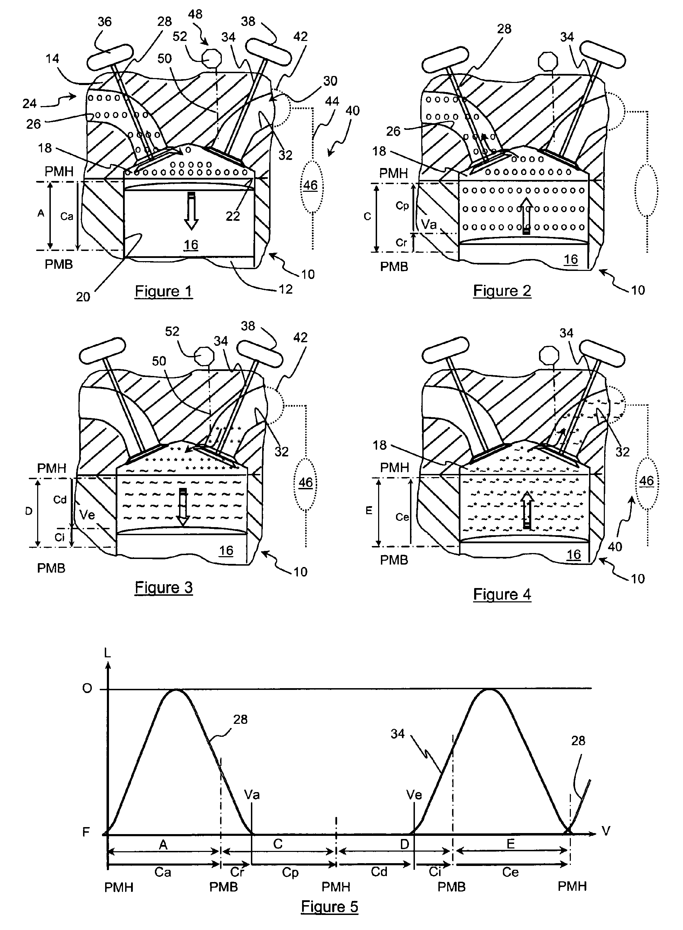

Sur les figures 1 à 4, le moteur illustré est un moteur à combustion interne à injection indirecte, notamment d'essence, et préférentiellement à allumage commandé. Cet exemple n'est pas limitatif et l'invention décrite ci-après peut également s'appliquer à un moteur à combustion interne à injection directe, de manière préférée à autoallumage, en particulier de type Diesel.

Le moteur décrit possède la particularité de fonctionner en suivant un cycle spécifique, tel que le cycle de Miller, selon lequel sa phase de détente est de course plus longue que sa phase de compression, comme cela sera décrit dans la suite de la description.

Ce moteur comprend au moins un cylindre 10 avec un corps de cylindre 12 fermé par une culasse 14. A l'intérieur du corps de cylindre 12 coulisse un piston 16 dans un mouvement alternatif rectiligne sous l'effet d'une bielle commandée par un vilebrequin (non représenté) en formant une chambre de combustion 18. Cette chambre est ainsi délimitée par la culasse, la paroi latérale 20 du corps de cylindre et la partie supérieure 22 du piston.

Ce piston se déplace entre une position de Point Mort Haut (PMH) où la partie supérieure 22 du piston 16 est la plus proche de la culasse 14 et une position de Point Mort Bas (PMB) où cette partie supérieure est la plus éloignée de cette culasse.

La culasse porte au moins un moyen d'admission 24 avec une tubulure d'admission 26 dont l'accès à la chambre de combustion 18 est contrôlé par une soupape d'admission 28. La culasse porte également au moins un moyen d'échappement 30 avec une tubulure d'échappement 32 associée à une soupape d'échappement 34 pour la communication avec cette chambre.

Les soupapes d'admission ainsi que d'échappement sont commandées en ouverture/fermeture par des moyens spécifiques. Ceux-ci doivent permettre de faire varier les lois de levées de ces soupapes, tant au niveau de leurs moments d'ouverture/fermeture qu'au niveau de leurs hauteurs d'ouverture, et cela indépendamment les unes des autres ou de manière associée. A titre d'exemple, ces moyens sont de type arbres à cames plus connus sous le sigle de VVT (Variable Valve Timing) ou WL (Variable Valve Lift) ou WA (Variable Valve Actuation).

Dans l'exemple décrit en relation avec les figures 1 à 4, la soupape d'admission 28 ainsi que la soupape d'échappement 34 sont pourvues de moyens de type WA respectivement 36 et 38 permettant de faire varier leurs lois de levée.

Le moteur décrit est un moteur à injection indirecte avec des moyens d'injection de carburant (non représentés) portés par la culasse et qui projettent du carburant dans la tubulure d'admission 26 pour y réaliser un mélange carburé avec l'air d'admission qui y circule. Ce mélange carburé est ensuite introduit dans la chambre de combustion 18au travers de la soupape d'admission.

Ce type d'injection de carburant peut être avantageusement associé à des moyens d'allumage du mélange carburé présent dans la chambre 18, comme un allumage commandé par une bougie (non schématisée).

Les moyens d'échappement 30 sont connectés à une ligne d'échappement 40 qui comporte essentiellement un collecteur d'échappement 42 raccordé à la sortie de la tubulure d'échappement 32, un tube d'échappement 44 et des moyens de dépollution des gaz qui circulent dans cette ligne, comme un catalyseur 46 avantageusement à trois voies.

Ce moteur comporte également des moyens d'injection d'air à l'échappement 48. Ces moyens comprennent un injecteur d'air (symbolisé sur les figures par le trait d'axe 50) qui est relié par tous moyens connus à une pompe à air 52. Cet injecteur est placé sur la tubulure d'échappement 32 d'une manière telle que le jet d'air issu de cet injecteur arrive à l'intérieur de cette tubulure et avantageusement au plus près de la soupape d'échappement 34 et en aval de celle-ci en considérant la circulation des gaz d'échappement allant de la chambre de combustion vers le collecteur d'échappement 42.

Les moyens de commande 36, 38 des soupapes 28, 34, les moyens d'injection de carburant et les moyens d'injection d'air 48 sont contrôlés par une unité de calcul (non représentée), plus communément appelée calculateur-moteur, que comporte habituellement un moteur.

Ce calculateur a pour fonction notamment de commander en ouverture/fermeture les soupapes, de contrôler les paramètres d'injection de carburant, comme le moment d'injection dans le cycle du moteur et/ou la durée d'injection de carburant, ainsi que de contrôler les paramètres d'injection de l'air dans la tubulure d'échappement.

La description du procédé qui va suivre se fera en relation avec un moteur à injection indirecte à allumage commandé des figures 1 à 4 associé à la figure 5 qui illustre les lois de levées de ses soupapes d'admission et d'échappement.

Dans l'exemple de la figure 1, le moteur est dans sa configuration de la phase d'admission A avec une course Ca du piston 16 allant du PMH vers le PMB.

Pour cela, au voisinage du PMH, les moyens de commande 36 commandent en ouverture la soupape d'admission 28 jusqu'à ce que le piston atteigne son PMB de manière à introduire à l'intérieur de la chambre de combustion 18 le mélange carburé présent dans la tubulure d'admission. Les moyens de commande 38 contrôlent le maintien en position de fermeture de la soupape d'échappement 34 pendant toute cette phase d'admission.

A partir de ce PMB, le piston a une course inverse en réalisant une phase dénommée phase de compression C où le piston va de sa position de PMB vers sa position de PMH. Ce déplacement du piston se décompose en deux parties, une course de refoulement Cr et une course de compression Cp, comme cela sera mieux décrit ci-après.

Ainsi comme montré aux figures 2 et 5, durant la course de refoulement Cr, la soupape d'admission 28 est ouverte et le piston 16 réalise la course Cr entre le PMB et un angle de vilebrequin Va, angle auquel la soupape d'admission 28 est commandée en position de fermeture. Durant cette course, une partie du mélange carburé présent dans la chambre 18 ressort de cette chambre par la tubulure 26.

Bien entendu, il est à la portée de l'homme du métier de déterminer l'angle de vilebrequin Va qui permettra de répondre à la demande de puissance du moteur.

De plus, cet homme du métier fera en sorte de fermer la soupape d'admission de manière à ce que le mélange carburé présent dans la tubulure d'admission ne soit pas évacué vers l'extérieur du moteur mais reste confiné dans cette tubulure d'admission (ou au pire dans le collecteur d'admission que comporte habituellement ce moteur).

A partir de l'angle de vilebrequin Va, les soupapes d'admission et d'échappement sont fermées et le piston 16 continue son déplacement jusqu'au PMH pour réaliser la course de compression Cp du mélange carburé entre l'angle Va et ce PMH, dit PMH compression.

A partir de ce PMH compression, le mélange carburé présent dans la chambre de combustion est enflammé en générant des gaz brulés (ou gaz d'échappement). Suite à cette combustion, le moteur réalise une phase de détente D, entre ce PMH et le PMB, avec une course de détente Cd et une course d'injection d'air Ci, comme illustré à la figure 3.

Lors de cette phase de détente et dans le cas où le moteur est dans un état de démarrage à froid, notamment lorsque le catalyseur 46 n'a pas atteint sa température de démarrage (ou température de "light off") et que les gaz d'échappement n'ont pas une température suffisamment élevée pour procéder au chauffage rapide de catalyseur, il est prévu d'injecter de l'air frais à l'échappement de manière à augmenter la température de ces gaz d'échappement.

Plus précisément, de l'air frais est injecté majoritairement à l'intérieur de la chambre de combustion car les régions les plus chaudes, localement riches (carburant désorbé des crevasses, etc.) et à pression élevée se trouvent à l'intérieur de cette chambre.

Pour cela et comme illustré aux figures 3 et 5, pendant la phase de détente D, le piston suit une course de détente Cd selon laquelle ce piston va du PMH jusqu'à un angle de vilebrequin Ve avant le PMB.

Les moyens de commande 38 commandent alors en ouverture la soupape d'échappement 34 à cet angle. Cet angle Ve est determiné préferentiellement lorsque la pression à l'intérieur de la chambre de combustion est inférieure à la pression régnant à l'échappement du moteur, généralement considérée au niveau du collecteur d'échappement 42 ou de la tubulure d'échappement.

Ces différentes pressions peuvent être évaluées à partir de tables contenues dans le calculateur et réalisées en relation avec les différents points de fonctionnement du moteur. Ces pressions peuvent également être mesurées, par exemple par des capteurs de pression placés dans la chambre de combustion et dans le collecteur d'échappement/tubulure d'échappement.

Simulténement ou quasi simultanément à cette ouverture de la soupape d'échappement, la pompe à air 52 est actionnée et de l'air frais est introduit par l'injecteur 50 à l'intérieur de la tubulure d'échappement 32 et à proximité de cette soupape. Bien entendu, des gaz d'échappement sont déjà présents dans cette tubulure et cela procure un mélange d'air frais et de gaz d'échappement.

Comme déjà mentionné, c'est dans la chambre de combustion que les connditions sont les plus favorables pour une combustion et cela suite aux températures élévées qui y règnent et à la préscence d'hydrocarbures imbrûlés dans les crevasses de cette chambre.

Ainsi, lors de l'ouverture de la soupape d'échappement 34 et durant la course Ci de l'angle de vilebrequin Ve jusqu'aux environs du PMB, une aspiration de l'air frais dans la chambre est réalisée au travers de la soupape d'échappement ouverte. Ceci permet de réaliser plus facilement un mélange réactif dans la chambre de combustion entre les gaz brûlés résiduels et l'air frais introduit à l'intérieur de cette chambre.

Par cela, une postcombustion des gaz brûlés résiduels est initialisée dans la chambre avec un dégagement de chaleur jusqu'à ce que le moteur ait achevé sa phase de détente au PMB, dénommé PMB détente, avec la fermeture de la soupape d'admission.

Alternativement, il peut être envisagé d'injecter de l'air frais à l'intérieur du collecteur d'échappement, ce qui ne peut que simplifier les moyens d'injection d'air.

Dans ce cadre, il a été précédemment fait mention d'injection d'air à l'échappement, ce qui comprend l'introduction de cet air dans la tubulure d'échappement ou dans le collecteur d'échappement.

Comme cela est connu, le mode opératoire du moteur se poursuit par une phase d'échappement E avec une course Ce du piston entre le PMB détente et son PMH, comme illustré aux figures 4 et 5.

Durant cette phase, les gaz à température élevée contenus dans la chambre de combustion 18 sont expulsés de cette chambre vers la tubulure d'échappement 32 au travers de la soupape d'échappement 34 qui est en position d'ouverture et cela sous l'impulsion du déplacement du piston 16 vers le PMH.

Ces gaz sont ensuite dirigés vers la ligne d'échappement 40 dans laquelle ils traversent le catalyseur 46 en y accélérant sa montée en température par échange thermique.

Aux environs du PMH du piston, la soupape d'échappement est fermée et le cycle de fonctionnement du moteur reprend à partir de la figure 1 et se poursuit jusqu'à ce que le catalyseur 46 ait atteint sa température de fonctionnement.

Grâce à cela, le délai pour obtenir une dépollution des gaz d'échappement circulant dans la ligne 40 est fortement raccourci.

La présente invention n'est pas limitée aux exemples de réalisation décrits ci-dessus mais englobe toutes variantes et tous équivalents.

Notamment, il peut être envisagé que la pompe à air 52 soit en action avant l'ouverture de la soupape d'échappement de la figure 3. Ceci a pour avantage de pouvoir aspirer de l'air frais qui a déjà été placé au voisinage de la soupape d'échappement, lorsque cette dernière est couverte.

Il peut être également prévu de réaliser, à partir de l'angle Ve, une succession de cycles d'ouverture/fermeture de la soupape d'échappement associés à une injection d'air jusqu'à la position au PMB du piston. Ceci a pour effet de favoriser le mélange d'air et de gaz brûlés à l'intérieur de la chambre de combustion.

## Revendications

1. Procédé de contrôle de l'injection d'air à l'échappement d'un moteur à combustion interne, notamment pour véhicule automobile, fonctionnant selon un cycle durant lequel sa phase de détente (D) est de course plus grande que sa phase de compression (C) et comprenant au moins un cylindre (10) avec une chambre de combustion (18), un piston (16) coulissant en un mouvement alternatif entre un point mort haut et un point mort bas, au moins un moyen d'admission (24) avec une soupape (28) associée à une tubulure d'admission (26), au moins un moyen d'échappement (30) avec une soupape (34) associée à une tubulure d'échappement (32), des moyens d'injection d'air frais (48) à l'échappement et une ligne d'échappement (40) comprenant au moins un moyen de dépollution (46) des gaz d'échappement, **caractérisé en ce qu'**il consiste, durant l'étape de démarrage à froid de ce moteur et pendant sa phase de détente (D), à injecter de l'air frais à l'échappement et à ouvrir la soupape d'échappement (34) quand la pression à l'intérieur de la chambre combustion est inférieure à la pression régnant à l'échappement de manière à introduire dans les gaz d'échappement présents dans la chambre de combustion l'air frais provenant de cet échappement.

2. Procédé de contrôle selon la revendication 1, **caractérisé en ce qu'**il consiste à ouvrir la soupape d'échappement à un angle de vilebrequin (Ve) pour lequel la pression à l'intérieur de la chambre combustion est inférieure à la pression régnant à l'échappement.

3. Procédé de contrôle selon la revendication 1 ou 2, **caractérisé en ce qu'**il consiste à injecter de l'air frais à l'intérieur de la tubulure d'échappement (32).

4. Procédé de contrôle selon la revendication 1 ou 2, **caractérisé en ce qu'**il consiste à injecter de l'air frais à l'intérieur du collecteur d'échappement (42) de la ligne d'échappement (40).

5. Procédé de contrôle selon l'une des revendications précédentes, **caractérisé en ce qu'**il consiste à injecter de l'air frais à l'échappement avant l'ouverture de la soupape d'échappement (34).

6. Procédé de contrôle selon l'une des revendications 1 à 4, **caractérisé en ce qu'**il consiste à injecter de l'air frais à l'échappement après l'ouverture de la soupape d'échappement (34).

7. Procédé selon la revendication 1 ou 2, **caractérisé en ce qu'**il consiste à réaliser une succession d'ouvertures et de fermetures de la soupape d'échappement (34) pour introduire dans la chambre de combustion (18) l'air frais provenant de l'échappement.
